# EUROPEAN PATENT APPLICATION

(11) **EP 1 990 769 A1**
(43) Date of publication of application: **12.11.2008**
(21) Application number: 07707091.0
(22) Date of filing: 19.01.2007
(51) Int. Cl.: G06T 7/00, G06F 21/20, G06T 1/00

(54) **PERSONAL IDENTIFICATION DEVICE AND PERSONAL IDENTIFICATION METHOD**

(30) Priority: 21.02.2006 JP 2006044033
(71) Applicant: Oki Electric Industry Company, Limited, Tokyo 105-8460 (JP)
(72) Inventor: NAGAO, Kagehiro, Tokyo 105-8460 (JP); SUGIOKA, Ken, Tokyo 105-8460 (JP); MASUDA, Makoto, Tokyo 105-8460 (JP); AMAMOTO, Naohiro, Tokyo 105-8460 (JP)
(74) Representative: Betten & Resch
(86) International application number: PCT/JP2007/050803
(87) International publication number: WO 2007/097144

(57) **Abstract**

It is possible to enable favorable face recognition to be carried out in accordance with external factors such as changes in an imaging environment. A personal identification device of the present invention is provided with a registered data storage unit 120 for storing registered data containing facial feature data for a registered user, a recognition parameter storage unit 122 for storing recognition parameters, a image determination unit 112 for determining whether or not the image quality of a user facial image input from an imaging device 110 is appropriate, an adjustment unit 114 for adjusting the settings of the imaging device 110 or modifying the recognition parameters, in accordance with the result of determination carried out in the image determination unit 112, a feature extraction unit 116 for extracting user facial feature data from a facial image, and a face recognition unit 124 for comparing the extracted feature data with the registered data to determine whether or not the user is a registered user based on the result of comparison and the recognition parameters.

## Description

### FIELD OF THE INVENTION

The present invention relates to a personal identification device and a personal identification method and, more particularly, to a personal identification device and a personal identification method that enable face recognition to be favorably carried out in response to external factors such as a change in an imaging environment.

### BACKGROUND ART

Hitherto, a face authentication technique has been proposed whereby an individual is identified using a facial image and then logging in to an authorized terminal device, or opening and closing of exits and entrances to buildings, are carried out. Generally, any system using a face authentication technique involves capturing a facial image of a person to be authenticated with a camera for registration; registering facial features useful for personal identification as registered data; recapturing the facial image of the same person with a camera and extracting the facial features; and comparing the facial features with the aforementioned registered data to determine whether or not they correspond.

However, a personal identification device employing face authentication (a face authentication device) is problematic in that it is more susceptible to influence by external factors such as the imaging environment in terms of lighting and the like and camera performance levels (recognition is more difficult) than other types of personal identification devices based on, for example, the fingerprint or iris.

In order to address such problems, Japanese Patent Application Laid-Open No. 2005-84815 discloses a technique for carrying out security control of passage of exits and entrances to buildings, which involves detecting the clarity (brightness) of a facial image captured by a camera installed at exits and entrances; adjusting parameters such as the aperture of the camera and recapturing the facial image to obtain a higher-quality image; and carrying out face authentication. More specifically, this technique involves first detecting a facial region and detecting the brightness of the facial region to determine whether it is too bright or too dark, and then adjusting parameters such as the aperture of the camera accordingly.

Some conventional face authentication devices enable a user to set a desired security level. For example, a user who desires to prevent information leaks to the greatest possible extent can set a sufficiently high security level to prevent an unauthorized person from illegally logging in; however, on the other hand, a change in imaging environment even makes it difficult for the user's identity to be recognized. Further, a user who desires to be easily recognized for logging in even in a changed imaging environment can set a low security level; however, on the other hand, this leads to greater ease of authentication for unauthorized persons.

### DISCLOSURE OF THE INVENTION

### PROBLEMS TO BE SOLVED BY THE INVENTION

However, when a basic security system such as face authentication is used, for example, for logging into a terminal device, an indispensable requirement for a user is convenient authentication of their own identity and, in conjunction with this, the user requires complete elimination of authentication of unauthorized persons. There is an additional need for elimination of troublesome set-up operations such as modifying a security level in accordance with the imaging environment.

However, the technique described in the aforementioned Japanese Patent Application Laid-Open No. 2005-84815 is problematic in that in a poor imaging environment, namely in places exposed to strong sunlight (outdoors in the daytime) or extremely dark places (at nighttime or in closed indoor spaces), the range of camera adjustment is limited such that identity authentication cannot be favorably performed even when the brightness of a facial image is detected and the parameters of a camera are adjusted. In particular, this type of problem tends to occur when face authentication is carried out using a portable terminal equipped with a camera, because this kind of terminal may be used in a wide variety of environments and thus the imaging environment is not specified.

In view of the aforementioned problems, an object of the present invention is to provide a novel and improved personal identification device and a personal identification method, which are capable of maintaining a high security level if the conditions for identity authentication are favorable, such as in the case of a favorable imaging environment, and of automatically switching settings so that a person can be appropriately recognized if the conditions for identity authentication are unfavorable, such as in the case of a poor imaging environment.

### MEANS FOR SOLVING THE PROBLEMS

In order to overcome the aforementioned problems, according to an aspect of the present invention, a personal identification device is provided, which is provided with a registered data storage unit that stores registered data including facial feature data for a registered user; a recognition parameter storage unit that stores a recognition parameter representing a recognition level for face recognition processing; an image determination unit that determines whether or not the image quality of a user facial image input from an imaging device is appropriate; an adjustment unit that adjusts the settings of the imaging device or modifies the recognition parameter stored in the recognition parameter storage unit based on the determination result from the image determination unit; a feature extraction unit that extracts user facial feature data from a facial image; and a face recognition unit that compares the feature data extracted by the feature extraction unit with the registered data stored by the registered data storage unit and determines whether or not the user is a registered user based on the result of the comparison and the recognition parameter stored in the recognition parameter storage unit.

According to this configuration, if the conditions for identity authentication are favorable, such as in the case of a favorable imaging environment, the image determination unit determines that the image quality of a facial image is appropriate, recognition parameters are maintained at a high recognition level, and a high security level can be maintained. Further, if the conditions for identity authentication are unfavorable, such as in the case of a poor imaging environment, the image determination unit determines that the image quality of the facial image is not appropriate and the adjustment unit automatically adjusts the settings of the imaging device so that the image can be recaptured and face recognition can be executed with improved image quality of the facial image, or the adjustment unit automatically modifies the settings of the recognition parameter and lowers the recognition level, so that the face recognition unit can recognize the face of the user identity.

The aforementioned adjustment unit may determine whether or not the settings of the imaging device can be adjusted when the image determination unit determines that the image quality of the facial image is not appropriate, and may adjust the settings of the imaging device if the settings can be adjusted and modify the recognition parameters stored in the recognition parameter storage unit if the settings cannot be adjusted. According to this configuration, if the conditions for identity authentication are not unfavorable, such as in the case of a poor imaging environment, the image determination unit determines that the image quality of a facial image is not appropriate and the adjustment unit first attempts to improve the quality of the facial image by adjusting the settings of the imaging device and recapturing the image. However, if the image quality is not sufficiently improved even by adjustment of the settings of the imaging device, or the settings of the imaging device cannot be adjusted, the adjustment unit automatically modifies the recognition parameters to temporarily lower the recognition level, thus enabling the face recognition unit to recognize the user identity.

The image determination unit may be configured to determine whether or not the image quality of the facial image is suitable based on the image quality of a central portion of the facial image. According to this configuration, the image quality may be reliably determined based on the image quality of a pre-defined central portion of the facial image without detection of the user facial region from the facial image. Accordingly, a problem whereby image determination is not possible because it is not possible to detect the facial region when the image quality of the facial image is extremely poor, can be overcome.

The aforementioned personal identification device may be incorporated in a portable terminal equipped with an imaging device. This allows the user to capture an image of their own face with the imaging device incorporated in a cellular telephone and to execute face authentication for, for example, authorization to log-in to a terminal device. In this case, the user may capture an image of their own face while observing the screen of the cellular telephone so as to position their own face at the central portion of the facial image.

According to another aspect of the present invention, in order to overcome the aforementioned problems, a personal identification method is provided that includes: an image determination step for determining whether or not the image quality of a user facial image input from an imaging device is appropriate; an adjustment potential determination step for determining whether or not it is possible to adjust the settings of the image device when the image quality of the facial image is determined not to be appropriate in the image determination step; an imaging device adjustment step for adjusting the settings of the imaging device and reattempting the image determination step when it is determined in the adjustment potential determination step that it is possible to adjust the settings of the imaging device; a recognition parameter modification step for modifying a recognition parameter stored in a recognition parameter storage unit, which represents the recognition level for face recognition processing, when it is determined in the adjustment potential determination step that it is not possible to adjust the settings of the imaging device; a feature extraction step for extracting user facial feature data from the facial image when the image quality of the facial image is determined to be appropriate in the image determination step or when the recognition parameter has been modified in the recognition parameter modification step; and a face recognition step for comparing the facial feature data extracted in the face feature step with registered data including facial feature data for a registered user, which is stored in a registered data storage unit, to determine whether or not the user is a registered user based on the result of the comparison and the recognition parameter stored in the recognition parameter storage unit. This enables the user to favorably perform face recognition processing in response to the imaging environment or the like.

According to another aspect of the present invention, in order to overcome the aforementioned problems, a personal identification method is provided that involves: a feature extraction step for extracting user facial feature data from a user facial image input from an imaging device; a face recognition step for comparing the facial feature data extracted in the feature extraction step with registered data including facial feature data on a registered user face, which is stored in a registered data storage unit, to determine whether or not the user is a registered user based on the result of comparison and a recognition parameter stored in a recognition parameter storage unit, which represents the recognition level for face recognition processing; an image determination step for determining whether or not the image quality of a user facial image is appropriate when the user cannot be identified as a registered user in the face recognition step; an adjustment potential determination step for determining whether or not it is possible to adjust the settings of the image device when it is determined in the image determination step that the image quality of the facial image is not appropriate; an imaging device adjustment step for adjusting the settings of the imaging device and reattempting the feature extraction step and/or the face recognition step when it is determined in the adjustment potential determination step that it is possible to adjust the settings of the imaging device; a recognition parameter modification step for modifying the recognition parameter stored in the recognition parameter storage unit when it is determined in the adjustment potential determination step that it is not possible to adjust the settings of the imaging device; and a reattempt step for reattempting the face recognition step based on the modified recognition parameters and the aforementioned comparison result. This enables the user to favorably perform face recognition processing in response to the imaging environment or the like.

The image determination step may be configured to determine whether or not the image quality of a facial image is appropriate even when sufficient user facial feature data cannot be extracted from the facial image in the feature extraction step. As a result of this, it is possible to carry out determination of image quality and implement measures to improve the image quality, such as adjusting the settings of the imaging device even when sufficient feature data cannot be extracted from the facial image.

As explained above, according to the present invention, a high security level can be maintained when the conditions for identity authentication are favorable, such as in the case of a favorable imaging environment, while settings can be automatically switched so as to appropriately recognize user identity when the conditions for identity authentication are unfavorable, such as in the case of a poor imaging environment.

### BRIEF DESCRIPTION OF THE DRAWINGS

Fig. 1 is a block diagram showing a schematic configuration of a personal identification device according to a first embodiment of the present invention.
Fig. 2 is an explanatory diagram illustrating an imaging situation for a facial image captured using a camera incorporated in a cellular telephone according to the same embodiment.
Fig. 3 is an explanatory diagram illustrating a facial image according to the same embodiment.
Fig. 4 is a flowchart showing user registration processing operations using the personal identification device according to the same embodiment.
Fig. 5 is a flowchart showing face authentication processing operations using the personal identification device according to the same embodiment.
Fig. 6 is a block diagram showing a schematic configuration of a personal identification device according to a second embodiment of the present invention.
Fig. 7 is a flowchart showing user registration processing operations using the personal identification device according to the same embodiment.
Fig. 8 is a flowchart showing face authentication processing operations using the personal identification device according to the same embodiment.
Fig. 9 is a flowchart showing a recognition parameter modification subroutine using the personal identification device according to the same embodiment.

### BEST MODE FOR CARRYING OUT THE INVENTION

Hereinafter, with reference to the attached drawings, preferred embodiments of the present invention are described in detail. In the present specification and attached drawings, constituent components having substantially the same functions are identified by the same reference numerals to avoid duplication of explanation.

### (First Embodiment)

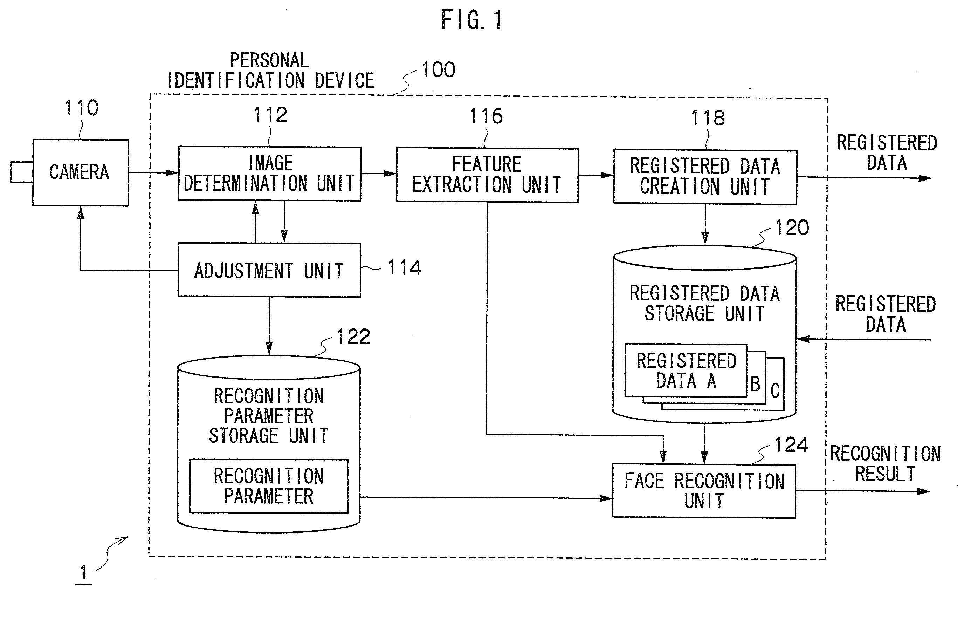

First, with reference to Fig. 1, a personal identification device according to a first embodiment of the present invention is described. Fig. 1 is a block diagram showing a schematic configuration of a personal identification device 100 according to the present embodiment.

As shown in Fig. 1, the personal identification device 100 according to the present embodiment is configured as, for example, a device incorporated in a cellular telephone 1 equipped with a camera 110 as an imaging device, that carries out a face authentication process based on a user facial image captured by the camera 110. In this way, the personal identification device 100 according to the present embodiment is used for basic security control of, for example, logging into terminal devices such as the cellular telephone 1. The personal identification device 100 is provided with an image determination unit 112, an adjustment unit 114, a feature extraction unit 116, a registered data creation unit 118, a registered data storage unit 120, a recognition parameter storage unit 122, and a face recognition unit 124. In the following, each of these units of the personal identification device 100 is described.

The image determination unit 112 determines whether or not the image quality of a user facial image entered from the camera 110 is appropriate (namely, whether or not any external factors, such as the imaging environment, have influenced the facial image, resulting in a degraded image). The image determination unit 112 according to the present embodiment is explained in terms of the example of using the brightness (luminance) of a facial image as a criterion for determining whether or not the image quality of a facial image is appropriate; however, the present invention is not limited to this example. The processing of the image determination unit 112 is described below.

Firstly, the inputting of a facial image with respect to the image determination unit 112 is explained. Usually, in devices that carry out face authentication, a camera is provided such that a large facial image is captured at the center of the image so that the facial features of a user to be identified can be appropriately extracted. In particular, in portable terminals such as the cellular telephone 1, the user can adjust the camera position of the portable terminal and ensure that a large image of their own face is captured at the center of the image.

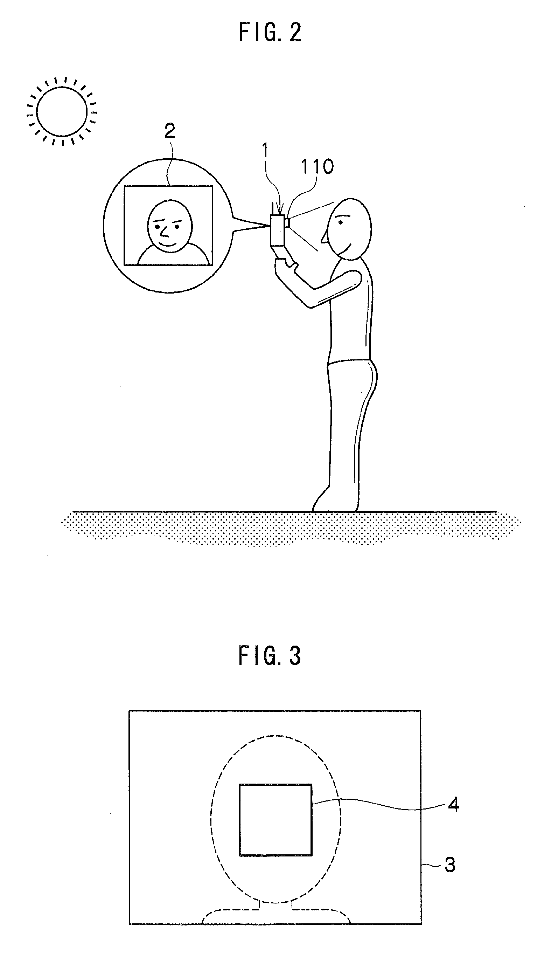

As shown in Fig. 2, in the present embodiment, the user of cellular telephone 1 captures an image of their own face using the camera 110 of the cellular telephone 1 at the time of user registration or face authentication thereafter. At this time, as shown in Fig. 2, the user captures an image of their own face while checking an image pre-viewed at a display portion of the cellular telephone 1 and adjusting the position of the cellular telephone 1 so that a large image of their own face is captured at the center of a screen 2. In this way, with a portable terminal such as the cellular telephone 1, the user can capture the image with their own face deliberately positioned at the center of the screen 2. Accordingly, as shown in Fig. 3, since it is highly likely that a facial image 3 captured in this way will have the user's face positioned at the central portion thereof, at the time of processing by the personal identification device 100, processing can be carried out on the assumption that the facial region exists at the center of the facial image 3. The facial image 3 captured as above is input to the image determination unit 112 of the personal identification device 100. The facial image 3 input to the personal identification device 100 may, for example, be either file-type moving image data or still image data.

Next, image quality determination processing by the image determination unit 112 is described. In face authentication using the facial image 3, the facial image requires a level of image quality that enables extraction of sufficient facial features of the user in order to obtain data for user identification. However, depending on the imaging environment, when, for example, the lighting environment is poor such as with backlighting or front-lighting outdoors in the daytime, or at nighttime, there are cases when the facial image has white spots caused by light or becomes dark due to insufficient light, as a result of which sufficient user facial features cannot be extracted or user face authentication cannot be executed. Accordingly, the image determination unit 112 detects the brightness of the input facial image 3 and determines whether or not the image quality of the facial image 3 is appropriate for face recognition.

Specifically, as shown in Fig. 3, the image determination unit 112 cuts out an image from a central portion of the facial image 3, for example, an image in a rectangular area 4, as a facial region and uses the region to assess the brightness. This is because, as described above, the image determination unit 112 can assume that the user face is captured at the center of the facial image 3 when the user captures their own face with the camera 110 of the cellular telephone 1. The image determination unit 112 detects the brightness (for example, an aggregate of the brightness levels of individual pixels in the rectangular area 4) of the rectangular area 4 at the center of the facial image 3 to determine whether or not the detected brightness falls within a given preset brightness range. If the determination result is that the detected brightness is lower than the given brightness range, the image determination unit 112 outputs a determination result indicating that the facial image 3 is "too dark" to the adjustment unit 114. If the detected brightness is higher than the given brightness range, the image determination unit 112 outputs a determination indicating that the facial image 3 is "too bright" to the adjustment unit 114. On the other hand, if the detected brightness lies within the given brightness range, the image determination unit 112 determines that the brightness of the facial image 3 is adequate and outputs the facial image 3 having appropriate brightness for face recognition to a feature extraction unit 116.

In this kind of image quality determination, as above, the image determination unit 112 determines the adequacy of image quality (brightness) based on an image in the rectangular area 4 at the pre-defined central portion, thereby eliminating the need to first detect a facial region from a facial image and then determine the image quality of the facial region as in the conventional technique of the aforementioned Japanese Patent Application Laid-Open No. 2005-84815. For this reason, even if the image quality of the facial image 3 is degraded to the extent that detection of the facial region is not possible due to an extremely poor imaging environment such as places exposed to strong sunlight (outdoors in the daytime) or excessively dark places (at nighttime and in closed rooms), determination of the image quality can be reliably carried out. Accordingly, corrective action such as sensitivity adjustment of the camera 110 may be implemented in accordance with the result of the determination of image quality.

The adjustment unit 114 adjusts the setting parameters and recognition parameters of the camera 110 in accordance with the determination result of the image determination unit 112. Specifically, the adjustment unit 114 adjusts the settings of the camera 110 so as to favorably recapture the facial image 3 when the image determination unit 112 determines that the image quality of the facial image 3 is poor. Any of the settings of the camera 110, including sensitivity, aperture, focus, shutter speed, saturation, contrast, white balance, and lighting luminosity, may be adjusted; however, in the following, the adjustment is described in terms of the example of adjusting the sensitivity (brightness) of the camera 110 to correct the brightness of the facial image 3.

When a determination result indicating that the facial image 3 is "too dark" or "too bright" is input from the image determination unit 112, the adjustment unit 114 outputs a signal instructing the camera 110 to adjust the sensitivity so as to capture the facial image 3 at a more appropriate level of brightness. Here, the adjustment unit 114 may instruct the camera 110 to increase (or decrease) the sensitivity thereof in steps by a given value, or may instruct the camera 110 to calculate an appropriate sensitivity in accordance with the determination result and to adjust the sensitivity thereof accordingly.

If, however, the setting (for example, sensitivity) of the camera 110 cannot be adjusted, namely, when the camera 110 has no setting adjustment function or the settings of the camera 110 have been adjusted to the limit thereof (for example, the sensitivity of the camera 110 has already been set to the maximum level in response to a determination of "too dark") the adjustment unit 114 sends a "not adjustable" signal to the image determination unit 112. The adjustment unit 114, which stores information on the allowed range of settings of the camera 110, may determine whether or not the setting of the camera 110 can be adjusted as described above.

In this way, adjustment of the setting (for example, sensitivity) of the camera 110 by the adjustment unit 114 improves the image quality (for example, brightness) of the facial image 3 recaptured by the camera 110 after adjustment of the setting. Accordingly, the feature extraction unit 116 and the face recognition unit 124 may respectively carry out feature extraction processing and face recognition processing based on the facial image 3 having improved image quality. However, in an extremely poor imaging environment, there are cases when the image quality of the facial image 3 is not improved to a level appropriate for face recognition even when the setting of the camera 110 is adjusted to the maximum level.

Here, the adjustment unit 114 according to the present embodiment first performs adjustment of the setting of the camera 110 as above, and then modifies a recognition parameter stored in the recognition parameter storage unit 122 when the image quality of the facial image 3 cannot be improved even by setting adjustment. The recognition parameter is a parameter that represents a recognition level for the face recognition processing (corresponding to a face authentication security level) and may, for example, constitute a predetermined identification threshold, as described in detail below. When it is not possible to adjust the setting of the camera 110 even when the image determination unit 112 determines that the image quality of the facial image 3 is poor, the adjustment unit 114 outputs an instruction to modify the recognition parameter stored in the recognition parameter storage unit 122 such that the recognition level for the face recognition processing is lowered from a high level to a low level by the face recognition unit 124. Accordingly, the face recognition unit 124, which is described below, can automatically modify a setting such that the user can be recognized, by temporarily lowering the face authentication security level. If the recognition parameter is modified by the adjustment unit 114 in this manner, the image determination unit 112 receives an instruction from the adjustment unit 114 and outputs the facial image 3, the image quality (brightness) of which has been improved to the upper limit within the possible range of settings of the camera 110, to the feature extraction unit 116.

The feature extraction unit 116 extracts user facial feature data from the facial image 3 input from the image determination unit 112. The facial feature data is information representing facial features (for example, the arrangement of eyes, nose, and mouth, as well as an image (template) of the surrounding area) useful for personal identification. Any known technique, such as those described in the aforementioned Japanese Patent Application Laid-Open No. 2005-84815, may be used in the feature extraction processing. The feature extraction unit 116 outputs the extracted feature data to a registered data creation unit 118 at the time of user registration, and to the face recognition unit 124 at the time of face recognition.

The registered data creation unit 118 creates registered data based on the feature data extracted from the facial image 3 by the feature extraction unit 116. This registered data associates registered data representing, for example, the facial features of a registered user (a legitimate user registered on the personal identification device 100; hereinafter the same) with personal identification information (for example, a user ID) on the registered user. The registered data creation unit 118 outputs the created, registered data to, for example, an upper-level device (not shown) using the personal identification device 100. The upper-level device is configured with, for example, application software installed in the cellular telephone 1. The upper-level device stores registered data created by the registered data creation unit 118 for one or more registered users in a registered data storage unit 120 as personal registered data. Further, the registered data creation unit 118 may store the created, registered data in the registered data storage unit 120, bypassing the upper-level device.

The registered data storage unit 120 stores the registered data created by the registered data creation unit 118 relating to the one or more registered users.

The recognition parameter storage unit 122 stores various kinds of parameters necessary for face recognition processing, such as a recognition parameter representing the recognition level (corresponding to the face authentication security level) for the face recognition processing. Here, an identification threshold is described as an example of a recognition parameter.

The identification threshold is the parameter used in determining whether or not the registered user, whose data has been registered, is the same person as the user to be recognized from a captured facial image 3, based on the degree of coincidence when the facial feature data contained in the registered data and the facial feature data obtained from the facial image 3 at the time of face authentication are compared (matching). For example, when a calculation method having a distribution of from 0 (no features coincide) to 100 (all features coincide) is used to determine the degree of coincidence, many facial features coincide if the registered user is the user being recognized and, therefore, it is possible to specify that the user being recognized is the registered user at a degree of coincidence of 80% or higher and to determine that the user may be a different person at a degree of coincidence of lower than 80%. In this case, 80 is preset as the identification threshold and the identification threshold "80" is stored in the recognition parameter storage unit 122.

Moreover, in the present embodiment, for example, a two-level identification thresholds corresponding to given security levels, namely, two identification thresholds including a high-level threshold corresponding to a higher security level and a low-level threshold corresponding to a lower security level, are set and stored in the recognition parameter storage unit 122. This enables face recognition processing to be carried out at two recognition levels (security levels). Alternatively, it is, of course, possible to set three or more levels of identification threshold, for example, high, moderate, and low-levels thresholds, corresponding to given security levels, without being limited by the above example.

The identification threshold stored in the recognition parameter storage unit 122 in this manner may be modified by the adjustment unit 114 (for example, lowered from a high-level threshold to a low-level threshold or raised from a low-level threshold to a high-level threshold). In the present embodiment, a high-level threshold is set in the recognition parameter storage unit 122 as an identification threshold in an initial state, and when the image quality of the facial image 3 is poor and the setting of the camera 110 cannot be adjusted as described above, the adjustment unit 114 modifies the setting from a high-level threshold to a low-level threshold.

The face recognition unit 124 compares the feature data of a user being recognized, whose facial image 3 has been captured by the camera 110, with the feature data included in the registered data stored in the registered data storage unit 120 to determine whether or not the user being recognized is the registered user and then outputs the result of recognition.

Specifically, firstly, the face recognition unit 124 compares the feature data extracted by the feature extraction unit 116 with feature data included in registered data for one or more registered users stored in the registered data storage unit 120 to calculate the degree of coincidence between the respective sets of feature data. Then, the face recognition unit 124 determines whether or not the user to being recognized, whose facial image 3 has been captured, is any one of the registered users based on the degree of coincidence with respect to the registered data as obtained from the above comparison and on the recognition parameter (for example, the identification threshold) stored in the recognition parameter storage unit 122, and identifies the user if the user is recognized as a registered user. Specifically, when the highest among the degrees of coincidence levels with respect to the respective sets of registered data is higher than the identification threshold stored in the recognition parameter storage unit 122, the face recognition unit 124 identifies the user being recognized as the registered user corresponding to the registered data with the highest degree of coincidence. On the other hand, when the coincidence levels with respect to all the registered users are lower than the identification threshold, it is determined that the user being recognized is none of the registered users.

If, as a result, a registered user is identified, the face recognition unit 124 extracts the user ID of the identified, registered user from the registered data of the user and outputs it to the upper-level device as the recognition result. Further, when it is determined that the user being recognized is none of the registered users, the face recognition unit 124 outputs this result to the upper-level device as the recognition result.

The configurations of respective parts of the personal identification unit 100 according to the present embodiment have been described. The image determination unit 112, the adjustment unit 114, the feature extraction unit 116, and the registered data creation unit 118 may be configured by software having a program module installed in, for example, the cellular telephone 1 that executes the respective functions described above, or may be configured by hardware, for example, a processor executing these functions. The registered data storage unit 120 and the recognition parameter storage unit 122 may be configured by various types of storage media such as a semiconductor memory, an optical disk, or a magnetic disk.

Next, a personal identification method using the personal identification device 100 configured as above is described. In the following, a personal identification method according to the present embodiment is explained by separately explaining user registration processing operations and face authentication processing operations.

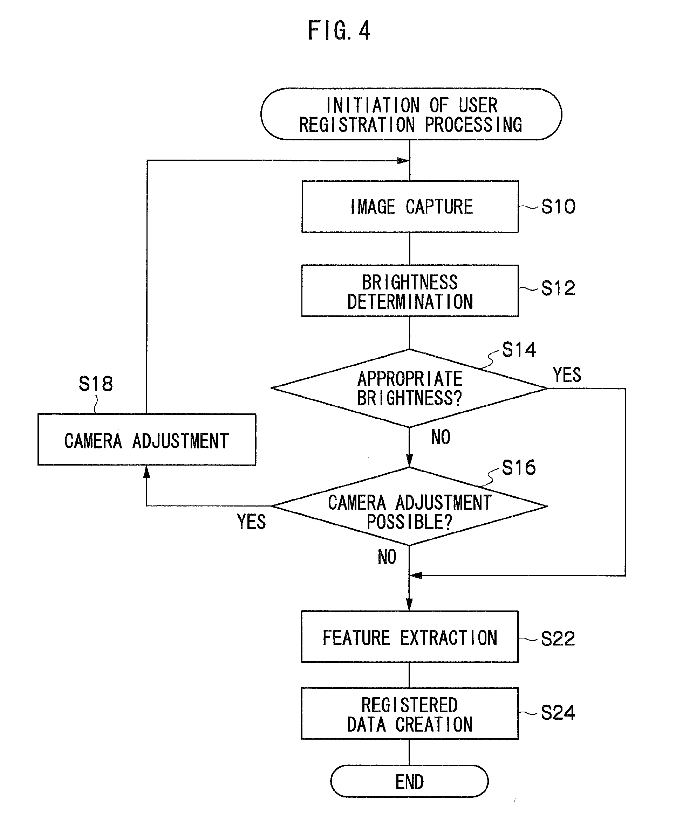

Referring to Fig. 4, user registration processing operations using the personal identification unit 100 according to the present embodiment are described. Fig. 4 is a flowchart showing user registration processing operations using the personal identification unit 100 according to the present embodiment.

As shown in Fig. 4, firstly, a user's face is captured by the camera 110 and the facial image 3 is input into the personal identification device 100 in step S10 (step S10: imaging step). As shown in Fig. 2, in order to perform user registration with respect to their own cellular telephone 1, the user adjusts the position of the camera 110 incorporated in the cellular telephone 1 so their own face is captured sufficiently largely at the center of the image, and then captures their own facial image 3. In the facial image 3 captured in this manner, the facial region of the user is positioned at the center as shown in Fig. 3. The facial image 3 is input into the image determination unit 112 of the personal identification device 100 from the camera 110 by the upper-level device using the personal identification device 100.

Subsequently, the image determination unit 112 determines whether or not the image quality (for example, brightness) of the facial image 3 input from the camera 110 is appropriate for user registration in steps S12, S 14 (steps S12, S 14: image determination steps). Specifically, the image determination unit 112 cuts out a rectangular area 4 from the center of the facial image 3, detects the brightness of the rectangular area 4 (for example, the sum of individual pixel brightness levels), and determines whether or not the brightness of the facial image 3 is appropriate depending on whether or not the detected brightness lies within a predetermined brightness range set in advance. If the result of the determination is that the detected brightness lies within the predetermined brightness range, it is determined that the brightness of the facial image 3 is appropriate and, since there is no need to adjust the settings of the camera 110, the process proceeds to step 22. In this case, the image determination unit 112 outputs the current facial image 3 input from the camera 110 to the feature extraction unit 116, while if the detected brightness is outside the predetermined brightness range, it is determined that the brightness of the facial image 3 is not appropriate (namely, that the facial image 3 is "too bright" or "too dark") and the process proceeds to step S16 in order to adjust the setting of the camera 110.

Then, in the step S16, when it receives a result of the determination indicating that the image quality of the facial image 3 is not appropriate, the adjustment unit 114 determines whether or not the setting (for example, the sensitivity) of the camera 110 can be adjusted (step S16: adjustment potential determination step). Specifically, the adjustment unit 114 determines whether or not the sensitivity of the camera 110 can be raised or lowered when it receives the result of the determination from the image determination unit 112 indicating that the facial image 3 is "too dark" or "too bright".

If it is determined as a result of this determination that the setting of the camera 110 can be adjusted, the adjustment unit 114 instructs the camera 110 to adjust the setting. In response to the adjustment instruction from the adjustment unit 114, the camera 110 adjusts the setting so as to improve the image quality of the facial image 3 (step S 18: camera setting adjustment step). Specifically, the camera 110 raises the sensitivity to capture a brighter facial image 3 or lowers the sensitivity to capture a darker facial image 3. Subsequently, the facial image 3 of the user is recaptured by the camera 110, the setting of which has been thus adjusted (step S10), the recaptured facial image 3 is input from the camera 110 into the image determination unit 112, and the image quality is assessed in the same manner as described above (steps S12, S24).

Further, in step S 16, for example, if the camera 110 has no setting adjustment function (such as a sensitivity adjustment function) or the setting of the camera 110 has reached its adjustment limit (for example, when, in response to a determination indicating that the image is "too dark", the sensitivity of the camera 110 is already at its maximum), the adjustment unit 114 determines that the setting of the camera 110 cannot be adjusted and the process proceeds to step S22. In this case, the adjustment unit 114 outputs a signal indicating "not adjustable" to the image determination unit 112 and the image determination unit 112 outputs the current facial image 3 to the feature extraction unit 116 when it receives the signal indicating "not adjustable".

According to the above operation flow, the image is repeatedly captured until it is determined that the image quality of the facial image 3 has become appropriate due to adjustment of the setting of the camera 110 (the step S 14), or until it is determined that adjustment of the setting of the camera 110 has been performed to the maximum limit (step S16).

Then, in step S22, the feature extraction unit 116 extracts facial feature data from the facial image 3 input from the image determination unit 112 (step S22: feature extraction step). Specifically, the facial image 3, the image quality of which has been determined to be appropriate, or the facial image 3 when it has been determined that the setting of the camera 110 cannot be adjusted, is input into the feature extraction unit 116 from the image determination unit 112. Then, the feature extraction unit 116 extracts, for example, a user-identifiable arrangement of eyes, nose, and mouth, as well as a surrounding image thereof, as feature data from the input facial image 3 and outputs the extracted feature data to the registered data creation unit 118.

Then, in step S24, the registered data creation unit 118 associates the feature data input from the feature extraction unit 116 with a user ID identifying the user, whose image has been captured as above, to create the registered data (step S24: registered data creation step). This created, registered data is outputted from the registered data creation unit 118 to an upper-level device using the personal identification device 100 and stored therein. Alternatively, the registered data creation unit 118 stores the created, registered data directly in the registered data storage unit 120 bypassing the upper-level device.

In the foregoing, the user registration processing operations carried out in the personal identification device 100 is described. The user registration processing enables the user of the cellular telephone 1 or the like to register the feature data of their own face in the cellular telephone 1, as a result of which, if the user is authenticated in the face authentication processing described below, the user is permitted to log into the cellular telephone 1. Further, a plurality of users can be registered in one cellular telephone 1 by performing the user registration processing for a plurality of users.

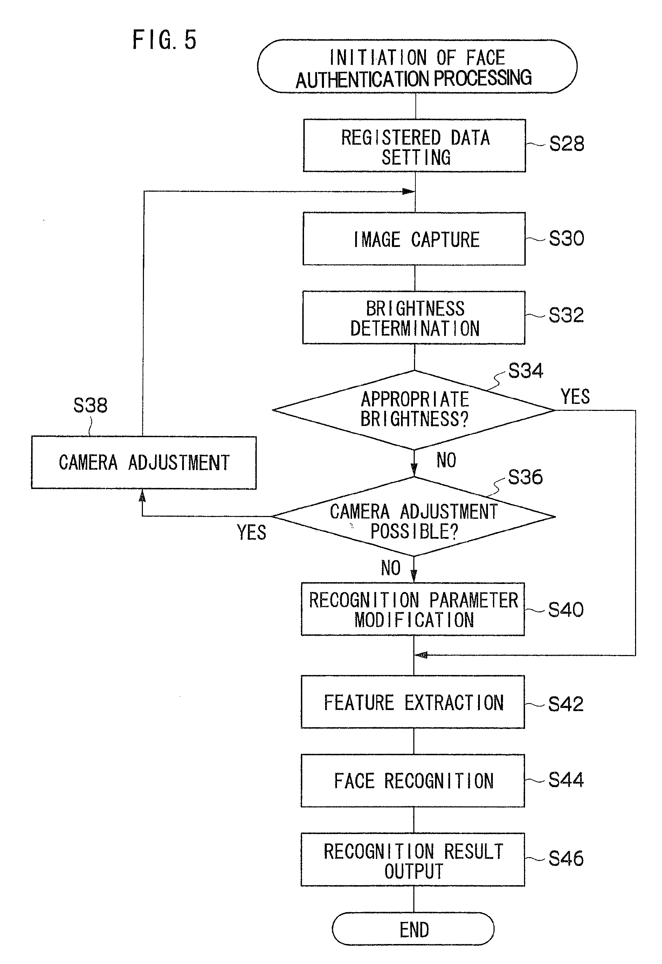

Next, referring to Fig. 5, the face authentication processing operations using the personal identification device 100 according to the present embodiment are described. Fig. 5 is a flowchart showing the face authentication processing operations using the personal identification device 100 according to the present embodiment.

As shown in Fig. 5, firstly, in step S28, the registered data for one or more registered users who have already been registered as users are set in the personal identification device 100 (step S28: registered data setting step). Specifically, the upper-level device using the personal identification device 100 inputs the registered data on the one or more registered users, who have been registered by the user registration processing, into the personal identification device 100 and the input, registered data are stored in the registered data storage unit 120. Here, only the registered data associated with the user ID of the user owning the cellular telephone 1 may be selected and input, or a plurality of sets of registered data associated with other user ID(s) may be input together. The former case can be used to perform recognition that distinguishes the owner from other people, and the latter case can be used to identify a specific person from among a plurality of registered users.

Next, in step S30, the camera 110 captures the face of the user and the facial image 3 is input into the personal identification device 100 (step S30: imaging step). In order to perform face authentication in order to obtain permission to log into their own cellular telephone 1, the user captures their own facial image 3 using the camera 110 incorporated in the cellular telephone 1. This step S30 is substantially the same as step S10 in the aforementioned user registration processing and detailed description thereof is omitted.

Then, in steps S32, S34, the image determination unit 112 determines whether or not the image quality (for example, brightness) of the facial image 3 input from the camera 110 is appropriate for face authentication processing (steps S32, S34: image determination step).
These steps S32, S34 are substantially the same as steps S12, S14 in the aforementioned user registration processing and detailed description thereof is omitted.

Then, in step S36, the adjustment unit 114 determines whether or not the setting (for example, sensitivity) of the camera 110 can be adjusted when it receives a result of the determination indicating that the facial image 3 is not appropriate (step S36: the adjustment potential determination step). Specifically, the adjustment unit 114 determines whether or not the sensitivity of the camera 100 can be raised or lowered when it receives the result of the determination from the image determination unit 112 indicating that the facial image 3 is "too dark" or "too bright".

If it is determined as a result of this determination that that the setting of the camera 110 can be adjusted, the adjustment unit 114 instructs the camera 110 to adjust the setting. In response to the adjustment instruction from the adjustment unit 114, the camera 110 adjusts the setting so as to improve the image quality of the facial image 3 (step S38: camera setting adjustment step). Specifically, the camera 110 raises the sensitivity so as to capture a brighter facial image 3 or lowers the sensitivity so as to capture a darker facial image 3. Subsequently, the facial image 3 of the user is recaptured by the camera 110, the setting of setting has been thus adjusted (step S30), the recaptured facial image 3 is input from the camera 110 into the image determination unit 112, and the image quality is assessed in the same manner as described above (steps S32, 34).

Further, in step S36, for example, if the camera 110 has no setting adjustment function or the setting of the camera 110 has reached its adjustment limit, the adjustment unit 114 determines that the setting of the camera 110 cannot be adjusted and the process proceeds to step S40 for modifying the recognition parameter. In this case, the adjustment unit 114 outputs a signal indicating "not adjustable" to the image determination unit 112 and instructs the recognition parameter storage unit 122 to "modify the recognition parameter". The image determination unit 112 outputs the current facial image 3 to the feature extraction unit 116 when it receives the signal indicating "not adjustable" from the adjustment unit 114.

According to the above operation flow, similarly to at the time of user registration, the image is repeatedly captured until it is determined that the image quality of the facial image 3 has become appropriate due to adjustment of the setting of the camera 110 (the step S34), or until it is determined that adjustment of the setting of the camera 110 has been performed to the maximum limit (the step S36).

Next, in step 40, the adjustment unit 114 modifies the recognition parameter stored in the recognition parameter storage unit 122 (step S40: recognition parameter modification step). As described above, the recognition parameter storage unit 122 retains, for example, two-level identification thresholds (a high-level threshold and a low-level threshold) as the recognition parameters and the high-level threshold is set in an initial state. If it is determined in the step S36 that the setting of the camera 110 cannot be adjusted, the adjustment unit 114 sends an instruction to the recognition parameter storage unit 122 to "modify the recognition parameter". The recognition parameter storage unit 122 modifies setting of the identification threshold from the high-level threshold to the low-level threshold when it receives the instruction to "modify the recognition parameter" from the adjustment unit 114. Accordingly, the recognition level for the face recognition processing (a security level) is lowered, whereby authentication is enabled even at a lower degree of coincidence of feature data.

Next, in step S42, the feature extraction unit 116 extracts the facial feature data from the facial image 3 of the user being recognized input from the image determination unit 112 (step S42: feature extraction step). Step S42 is substantially the same as step S22 in the aforementioned user registration processing and detailed description thereof is omitted. However, the feature extraction unit 116 outputs the feature data extracted from the facial image 3 to the face recognition unit 124.

Moreover, in step S44, the face recognition unit 124 compares the feature data of the user being recognized, which is extracted in step S42, with the registered data, which is stored in advance in the registered data storage unit 120 in step S28 and determines whether or not the user being recognized corresponds to one of the registered users based on the result of the comparison and the recognition parameter stored in the recognition parameter storage unit 122 (step S44: face recognition step).

In the face recognition processing, firstly, the face recognition unit 124 obtains feature data on the face of the user being recognized from the feature extraction unit 116; obtains, for example, the registered data on a plurality of registered users from the registered data storage unit 120; and obtains the currently-assigned identification threshold (a high-level threshold or a low-level threshold) from the recognition parameter storage unit 122. Then, the face recognition unit 124 compares the feature data of the user being recognized with the registered data on a plurality of registered users in turn to obtain the respective degrees of coincidence for each set of registered data. Moreover, the face recognition unit 124 determines whether or not the highest degree of coincidence calculated is higher than the currently-assigned identification threshold.

If the highest degree of coincidence is higher than the current identification threshold, the face recognition unit 124 determines that the user being recognized is a registered user corresponding to the registered data with the highest degree of coincidence and outputs a user ID associated with the registered data with the highest degree of coincidence to the upper-level device, as the recognition result. Thus, the user being recognized is successfully authenticated and the user is permitted to log into the cellular telephone 1.

However, if the highest degree of coincidence is lower than the identification threshold, the face recognition unit 124 determines that the user being recognized is none of the registered users and outputs a signal indicating "not recognized" as the recognition result. In this case, the next frame of the facial image 3 is used to repeat the feature extraction processing (step S42) and the face recognition processing (step S44) in the same manner as described above. After a determination of "not recognized" is repeated to a certain extent (for example, "not recognized" repeats within a certain time period or a certain number of times), the face recognition unit 124 terminates the processing as a authentication failure.

In this face recognition step S44, the recognition level differs according to whether the identification threshold in the recognition parameter storage unit 122 is set to the high-level threshold or the low-level threshold. Namely, if it is determined in step S34 that the image quality (for example, brightness) of the facial image 3 is appropriate, the identification threshold remains at the high level of the initial state, whereby the face recognition processing is carried out at a high recognition level in this step S44. As a result, the user is not authenticated if the degree of coincidence is not high, whereby a high security level may be maintained and, since the image quality of the facial image 3 is appropriate, user identity authentication may be smoothly carried out.

However, if it is determined in step S34 that the image quality of the facial image 3 is not appropriate and in step S36 that the setting of the camera 110 cannot be adjusted, the identification threshold is modified to the low level in the recognition parameter storage unit 122 (step S40) and face authentication processing is carried out at a lower recognition level in this step S44. As a result, since authentication is possible even at a somewhat lower level of coincidence, identity authentication may be smoothly carried out at a lower security level when the image quality cannot be improved even if the setting of the camera 110 are adjusted because the image quality of the facial image 3 is severely deteriorated due to a poor imaging environment or the like. After completion of authentication using the low-level threshold, the identification threshold in the recognition parameter storage unit 122 is restored from the low-level threshold to the high-level threshold.

### (Second Embodiment)

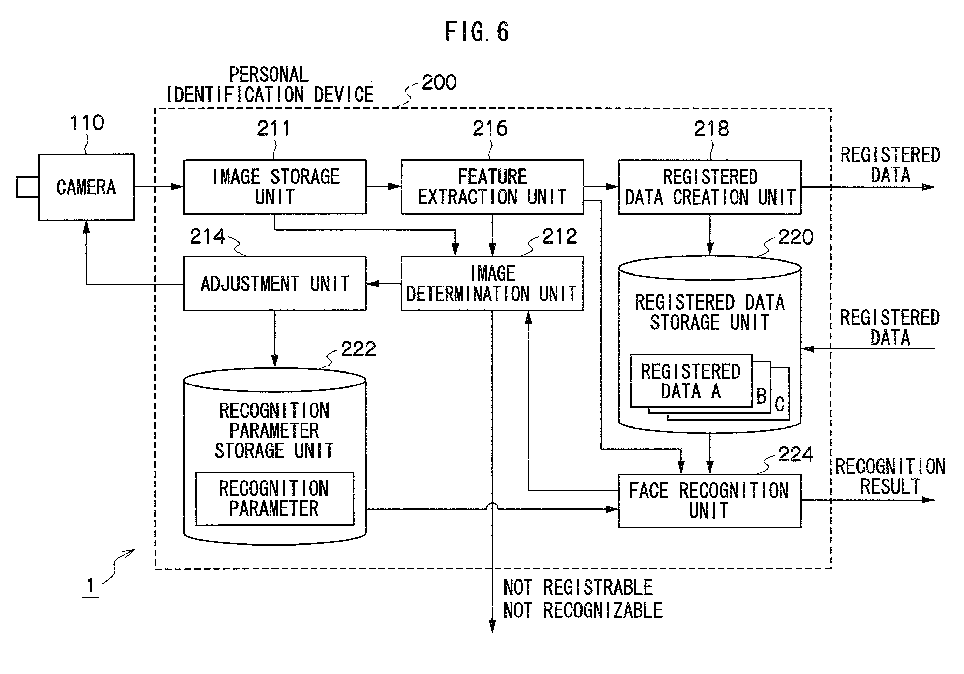

Next, referring to Fig. 6, a personal identification device according to a second embodiment of the present invention is described below. Fig. 6 is a block diagram showing a schematic configuration of a personal identification device 200 according to the second embodiment.

As shown in Fig. 6, the personal identification device 200 is incorporated in a cellular telephone 1 equipped with the camera 110 as an imaging device as in the aforementioned first embodiment. This personal identification device 200 is provided with an image storage unit 211 for storing a facial image 3 input from the camera 110, an image determination unit 212 for determining whether or not the image quality of the facial image 3 is appropriate, an adjustment unit 214 for adjusting the setting of the camera 110 or modifying a recognition parameter based on the determination result from the image determination unit 212, a feature extraction unit 216 for extracting user facial feature data from the facial image 3, a registered data creation unit 218 for creating registered data based on the feature data extracted from the facial image 3, a registered data storage unit 220 for storing registered data for one or more registered users, a recognition parameter storage unit 222 for storing recognition parameters, and a face recognition unit 224 for comparing the feature data extracted from the facial image 3 with the registered data stored in the registered data storage unit 220 to determine whether or not the user being recognized is a registered user.

In the personal identification device 200 according to this second embodiment, first, the facial image 3 input from the camera 110 is stored in the image storage unit 211, then, with respect to the facial image 3, feature extraction processing is carried out by the feature extraction unit 216 and/or face recognition processing is carried out by the face recognition unit 224, and then the image determination unit 212 determines whether or not the image quality of the facial image 3 read out from the image storage unit 211 is appropriate when the image determination unit 212 receives an instruction from the feature extraction unit 216 or the face recognition unit 224 when the feature extraction processing and/or the face recognition processing has not been favorably carried out.

The image determination unit 212, the adjustment unit 214, the feature extraction unit 216, the registered data creation unit 218, the registered data storage unit 220, the recognition parameter storage unit 222, and the face recognition unit 224 of the personal identification device 200 according to the second embodiment have substantially the same functions as those of the image determination unit 112, the adjustment unit 114, the feature extraction unit 116, the registered data creation unit 118, the registered data storage unit 120, the recognition parameter storage unit 122, and the face recognition unit 124 of the personal identification device 100 according to the first embodiment and the detailed descriptions thereof are omitted.

Next, a personal identification method using the personal identification device 200 configured as above is described. In the following, the personal identification method according to the second embodiment is described by separately explaining user registration processing operations and face authentication processing operations.

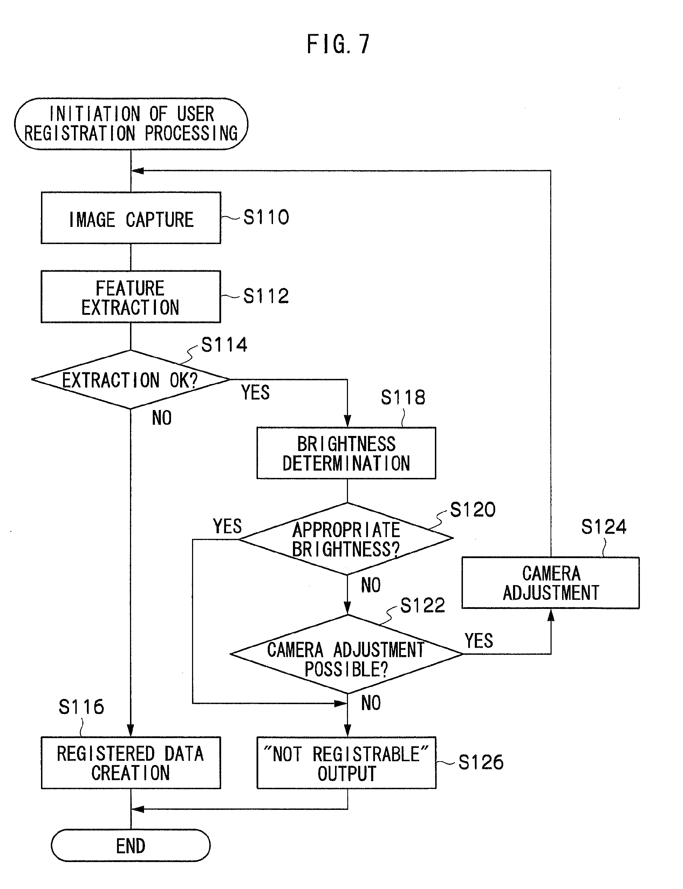

Firstly, referring to Fig. 7, the user registration processing operations using the personal identification device 200 according to the second embodiment are described. Fig. 7 is a flowchart showing the user registration processing operations using the personal identification device 200 according to the present embodiment.

As shown in Fig. 7, in step S 110, the camera 110 captures an image of a user's face and an upper-level device (application) using the personal identification device 200 inputs the facial image 3 captured by the imaging into the personal identification device 200 (step S 110: imaging step). Then, the image storage unit 211 stores the facial image 3 input from the camera 110. This facial image 3 may be, for example, either file-type moving image data or still image data.

Next, in step S112, the feature extraction unit 216 extracts the facial feature data useful for personal identification from the facial image 3 obtained from the image storage unit 211 (step S 112: feature extraction step). This step S 112 is almost the same as step S22 in the aforementioned user registration processing according to the first embodiment and detailed description thereof is omitted.

Moreover, in step S 114, the feature extraction unit 216 determines whether or not sufficient feature data can be extracted from the facial image 3 (step S 114: extraction potential determination step). If, as a result, it is determined that sufficient feature data can be extracted, the feature extraction unit 216 outputs the feature data to the registered data creation unit 218, and then in step S 116 the registered data creation unit 218 associates the feature data entered from the feature extraction unit 216 with a user ID identifying the user, whose image has been captured, and creates the registered data (step 116: registered data creation step), and then, the user registration processing is terminated. This step S 116 is substantially the same as step S24 in the aforementioned user registration processing according to the first embodiment and detailed description thereof is omitted.

However, if it is determined in step S 114 that sufficient feature data cannot be extracted, the feature extraction unit 216 determines that there is a problem with the facial image 3 and instructs the image determination unit 212 to determine the image quality and the process proceeds to step S 118.

Next, in steps S 118, S 120, the image determination unit 212 determines whether or not the image quality (for example, brightness) of the facial image 3 is appropriate for user registration when it receives instruction to determine the image quality from the feature extraction unit 216 (steps S118, S120: image determination step). These steps S118, S120 are substantially the same as steps S12, S 14 in the aforementioned user registration processing according to the first embodiment and detailed descriptions thereof are omitted.

If the result of the image determination is that it is determined that the image quality of the facial image 3 is appropriate, the image determination unit 212 determines that the reason why feature data could not be extracted from the facial image 3 was not the poor image quality (for example, brightness) of the facial image 3 (for example, no face appearing in the image) and outputs a signal indicating "not registrable" to an external upper-level device (step S126). In this case, the upper level device displays an error message such as, "the face has not been correctly captured" and the entire processing is terminated without carrying out user registration.

However, if it is determined that the image quality of the facial image 3 is not appropriate (for example, that the facial image 3 is "too bright" or "too dark"), the image determination unit 212 outputs a signal indicating this determination result to the adjustment unit 214 and the process proceeds to step S122.

Subsequently, in step S122, the adjustment unit 214 determines whether or not the setting (for example, sensitivity) of the camera 110 can be adjusted when it receives the determination result from the image determination unit 212 indicating that the image quality of the facial image 3 is not appropriate (step S122: adjustment potential determination step). If it is determined that the setting of the camera 110 can be adjusted, the process proceeds to step S124 for adjusting the setting of the camera 110 (for example, sensitivity) in accordance with the adjustment instruction from the adjustment unit 214 (step S124: imaging device adjustment step). Specifically, the upper level device (application) using the personal identification device 200 adjusts, for example, the sensitivity (brightness) of the camera 110 so that it can capture a brighter facial image when it receives a determination result from the personal identification device 200 indicating that the facial image 3 is "too dark", while it adjusts the sensitivity of the camera 110 so that it can capture a darker facial image when it receives a determination result indicating that the facial image 3 is "too bright".

Then, an image is recaptured by the camera 110, the setting of which has been adjusted, and the facial image 3 with improved image quality is input into the personal identification device 200 (step S110) and, then, feature extraction is reattempted (step S112). These operations (steps S110 to S124) are repeated until sufficient feature data can be extracted from the facial image 3. When, as a result, sufficient feature data can be extracted, the registered data is created as described above (step S 116) and the user registration processing is terminated.

Further, when it is determined in step S122 that the setting of the camera 110 cannot be adjusted (including adjustment beyond the adjustment limits), the process proceeds to step 126, a signal indicating "not registrable" is output to the upper level device and processing is terminated without carrying out user registration.

The user registration processing operations in the personal identification device 200 have been described above. This user registration processing allows the user of the cellular telephone 1 or the like to register their own facial feature data in the cellular telephone 1, as a result of which the user is permitted to log into the cellular telephone 1 if the user is authenticated in the face authentication processing described below. Alternatively, plural users can be registered on the cellular telephone 1 by repeating the user registration processing for a plurality of users.

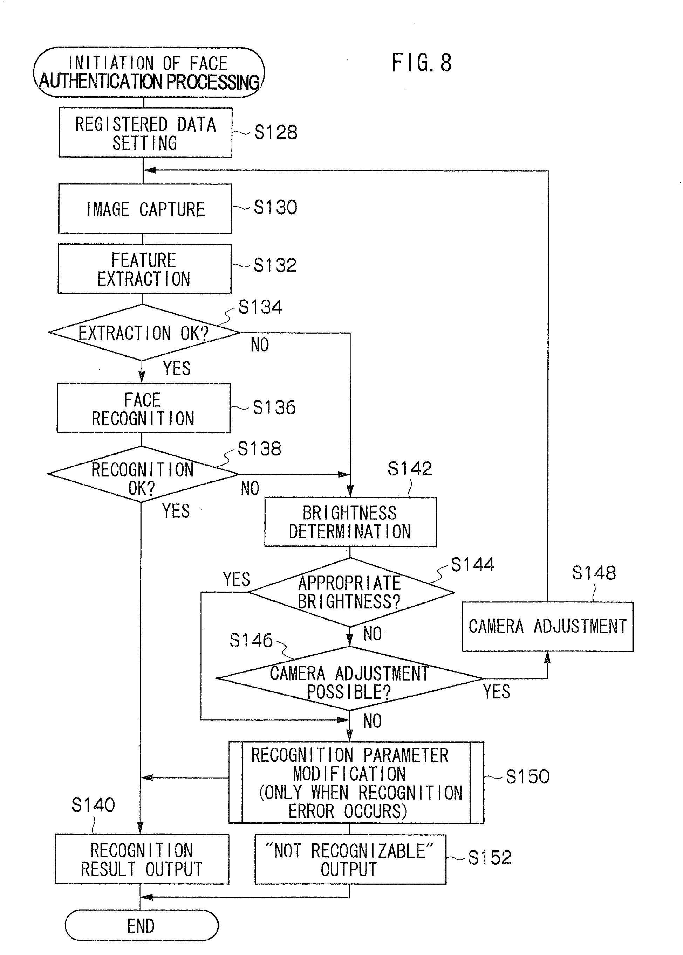

Next, referring to Fig. 8, face authentication processing operations using the personal identification device 200 according to the present embodiment are described. Fig. 8 is a flowchart showing the face authentication processing operations using the personal identification device 200 according to the present embodiment.

As shown in Fig. 8, in step S128, the registered data on one or more users, who have already been registered as users, are input from the upper level device to the personal identification device 200 and are stored in the registered data storage unit 220 (step S128: registered data setting step). This step S128 is substantially the same as step S28 in the aforementioned face authentication processing according to the first embodiment and detailed description thereof is omitted.

Then, in step S130, the camera 110 captures the face of a user and the facial image 3 is input into the personal identification unit 200 (step S130: imaging step). This step S130 is substantially the same as step S 110 in the aforementioned user registration process according to the first embodiment and detailed description thereof is omitted.

Subsequently, in step S 132, the feature extraction unit 216 extracts feature data from the facial image 3 obtained from the image storage unit 211 (step S132: feature extraction step) and, then, determines whether or not sufficient feature data has been extracted (step S 134: extraction potential determination step).

If it is determined that sufficient feature data has not been extracted, the image determination unit 212 determines the image quality (steps S 142, S 144: image determination steps) and the setting of the camera 110 is repeatedly adjusted (step S 146: adjustment potential determination step, step S148: imaging device adjustment step) until sufficient feature data can be extracted from the facial image 3. These steps S132, S134, S142, S144, S146, and S148 are substantially the same as steps S 112, SS114, S 118, S 120, and S 124, respectively in the aforementioned user registration process and detailed descriptions thereof are omitted. In the course of this processing flow, if sufficient feature data cannot be extracted from the facial image 3 and the setting of the camera 110 cannot be adjusted, the process proceeds to step S152, where the image determination unit 212 outputs a signal indicating "not recognizable" to the upper level device and the face terminated as a recognition error.

However, if it is determined in step S 134 that sufficient feature data has been extracted from the facial image 3, the image extraction unit 216 outputs the feature data to the face recognition unit 224 and the process proceeds to step S 136.

In this step 136, the face recognition unit 224 compares the feature data of the user being recognized, which has been extracted in step S 132, with the registered data, which has been stored in advance in the registered data storage unit 220 in the step S128, to determine whether or not the user being recognized is one of the registered users based on the result of comparison and the recognition parameter stored in the recognition parameter storage unit 222 (step S136: face recognition step). This step S136 is substantially the same as step S44 in the aforementioned face recognition process according to the first embodiment and detailed description thereof is omitted.

Moreover, in step 138, the face recognition unit 224 determines whether or not it has been possible to recognize the user being recognized as one of the registered users via the face recognition processing (step S138: recognition potential determination step). Specifically, if the highest degree of coincidence between the feature data of the user being recognized, which has been extracted as above, and the respective sets of registered data, is higher than the identification threshold that is the recognition parameter, the face recognition unit 224 determines that the user being recognized is the registered user associated with the registered data with the highest degree of coincidence and, then, outputs the user ID of the registered user as the recognition result (step S 140).

However, if the degree of coincidence does not reach the identification threshold with respect to any of the registered data, it is likely that a significant disparity exists between the feature data of the facial image 3 from the face authentication and the feature data of the facial image 3 from the user registration, which disparity has been caused by external factors such as a poor imaging environment. Here, if none of the registered data reaches the identification threshold and the user being recognized cannot be identified as one of the registered users, the face recognition unit 224 outputs an image determination instruction to the image determination unit 212 and the process proceeds to step S 142.

In this case, when the image determination unit 212 receives the image determination instruction from the face recognition unit 224, the image determination unit 212 determines whether or not the image quality of the facial image 3 is appropriate in the same manner as during user registration as above and, then, outputs a determination result (steps S142, S144). If it is determined that the image quality is not appropriate, it is determined whether or not the setting of the camera 110 can be adjusted (step S 146), and if the setting can be adjusted, the setting of the camera 110 is adjusted (step S148), the camera 110, the setting of which has been adjusted, recaptures an image and then re-inputs the recaptured facial image 3 (step S 130). This operation is repeated until a recognition result is obtained from the face recognition unit 224 (step S138).

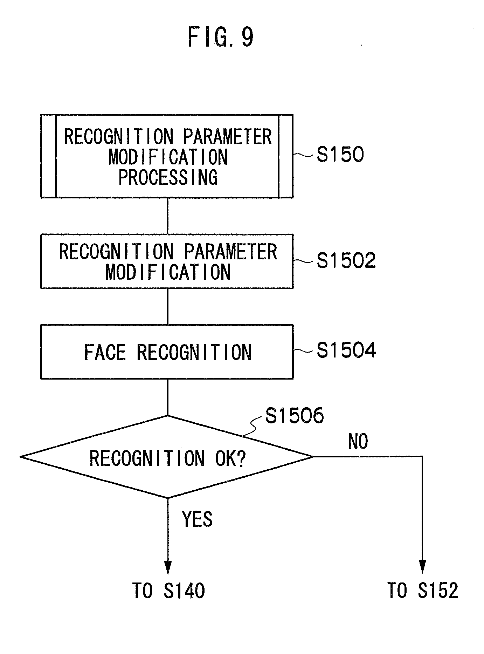

If it is determined that the setting of the camera 110 cannot be adjusted in step S 146 during these operations (including adjustment beyond the adjustment limits), the process proceeds to step S 150 and recognition parameter modification processing is performed. Here, referring to Fig. 9, the recognition parameter modification processing carried out in step S 150 is described in detail.

As shown in Fig. 9, firstly, in step S 1502, the adjustment unit 214 modifies the setting of the identification threshold stored in the recognition parameter storage unit 222 from the initial-state high-level threshold to a low-level threshold (step S1502: recognition parameter modification step). This step S 1502 is substantially the same as step S40 in the aforementioned face authentication processing according to the first embodiment and detailed description thereof is omitted. The modification of the identification threshold to the low-level threshold in this manner enables the recognition level of the face recognition processing in the face recognition unit 224 to be lowered. Accordingly, even when the image quality of the facial image 3 is extremely poor due to the influence of the imaging environment or the like and cannot be improved by adjusting the setting of the camera 110, the user can be conveniently recognized.

Next, in step S 1504, the face recognition unit 224 performs face recognition processing using the low-level threshold following the above modification (step S1504), and then determines whether or not the highest degree of coincidence between the extracted feature data and the respective sets of registered data is higher than the low-level threshold (step S1506). If the highest degree of coincidence is higher than the low-level threshold, the face recognition unit 224 determines that the user being recognized is the registered user associated with the registered data with the highest degree of coincidence and the process proceeds to step S 140 shown in Fig. 8 to output the user ID of the registered user as the recognition result (step S 140). On the other hand, if the highest degree of coincidence is lower than the low-level threshold, the face recognition unit 224 determines none of the registered users could be recognized as corresponding to the user being recognized even though the identification threshold has been lowered and the process proceeds to step S 152 shown in Fig. 8 at which a signal indicating "not recognizable" is output to the upper level device (step S 152). In this case, the upper level device displays an error message such as, "the face has not been correctly captured" and the face authentication processing is terminated.

Thus, in the personal identification method according to the second embodiment, the image quality is determined depending on whether or not sufficient feature data can be extracted from the facial image 3 or on whether or not a recognition result could be obtained by the face recognition, and recovery measures such as adjustment of the settings of the camera 110 or modification of the recognition parameters, are implemented. Accordingly, this personal identification method, which enables the image determination processing to be carried out as necessary when an error occurs, is efficient.

The personal identification devices 100, 200 according to the first and second embodiments of the present invention and the personal identification methods using the devices have been described in detail. According to the aforementioned embodiments, when the conditions for identity authentication are favorable, such as in the case of a good imaging environment, a user may be authenticated at a high security level. Further, even when the image quality of the facial image 3 has been degraded due to external factors such as the imaging environment, the automatic adjustment of the settings of the camera 110 enables the acquisition of a facial image 3 appropriate for face recognition, making it possible to carry out the authentication process while maintaining the high security level. In addition, even when the image quality cannot be satisfactorily improved even with adjustment of the settings of the camera 110, since recognition is performed after the recognition parameters (identification thresholds) have been automatically modified to a low level, the user identity can be favorably authenticated while temporarily lowering the security level.

Accordingly, it is possible to prioritize efficient authentication of a user of a terminal device such as a cellular telephone 1 by the user when a basic security system such as face recognition is used to log into the terminal device, while authentication of unauthorized persons is eliminated as far as possible. Moreover, since adjustment of the settings of the camera 110 and modification of the recognition parameters are performed automatically, there is no need for the user to modify settings such as the security level in accordance with the imaging environment.

According to the aforementioned embodiments, the image determination units 112, 212 assesses the image quality of the facial image 3 based on the central area of the facial image 3, assuming that a facial region exists therein, without first detecting the facial region within the facial image 3. For this reason, even when the image quality of the facial image 3 has been degraded to such an extent that detection of the facial region is not possible due to an extremely poor imaging environment, the image quality of the facial image 3 may be determined. Accordingly, even in imaging environments that pose difficulties for recognition, such as outdoors in the daytime or at nighttime, corrective action, such as adjusting the settings of the camera 110 in accordance with the result of the image determination, may be correctly carried out, making it possible to appropriately perform user registration processing and the face recognition processing.

Referring to the attached drawings, the preferred embodiments of the present invention have been described, but the invention is not limited to these examples. It is evident that a person skilled in the art will be able to conceive of modified or altered examples within the range described in the claims and it should be appreciated that these modified and amended examples are included within the technical scope of the present invention.

For example, in the aforementioned embodiments, examples wherein the personal identification devices 100, 200 are incorporated in the cellular telephone 1 has been described, but the present invention is not limited to these examples. The personal identification devices 100, 200 may be incorporated in portable terminals such as Personal Digital Assistants (PDA), lap-top personal computers, digital cameras, video cameras, portable game machines, portable audio players, electronic notebooks, and electronic dictionaries, or may be incorporated in various kinds of electronics devices such as desk-top personal computers, intelligent home appliances and car audio equipment. Alternatively, the personal identification device 100 may be used as a security management device for controlling the opening and closing of exits and entrances of a building.

In the aforementioned embodiments, the arrangement of eyes, nose, and mouth as well as a surrounding area image (template) thereof are extracted as facial feature data and then user registration or face recognition is performed, but the present invention is not limited to these examples and any method which allows a user face to be recognized is included in the scope of the present invention independent of the extraction process and data organization thereof.

In the aforementioned embodiments, the image quality of the facial image 3 has been described in terms of the brightness and darkness of the facial image 3 but the present invention is not limited to these examples and may be applied to other factors such as blurring (out of focus) of the facial image 3. Blurring in an image may be detected based on the clarity (edge sharpness) of the rectangular area 4 at the central region of the facial image 3 shown in Fig. 3.

In the aforementioned embodiments, the example of identification thresholds has been described as variable recognition parameters but the present invention is not limited to this example and any parameter useful for switching the recognition level (the security level) assigned to the face recognition process may be used.

In the aforementioned embodiments, when modifying the recognition parameters, the identification threshold is switched from a high-level threshold to a low-level threshold in one step, but the present invention is not limited to this example. For example, it is possible for the identification threshold to be gradually lowered from a high-level threshold to a low-level threshold step by step and for the recognition processing to be repeated each time. In this case, there is an advantage in that the identification threshold is not lowered more than necessary and thus the security level is not excessively lowered.

In the aforementioned embodiments, the image quality of the facial image 3 is determined based on the rectangular area 4 at the central portion of the facial image 3, but the present invention is not limited to this example. Any shaped portion, such as a circular or elliptical area at the central portion of the facial image 3, may be used as a target area used for determination and, of course, the entire area of the facial image 3 may be used as the target for determination.

### DESCRIPTION OF REFERENCE NUMERALS

- 1: cellular telephone
- 2: screen
- 3: facial image
- 4: rectangular area
- 100, 200: personal identification device
- 110: camera
- 112, 212: image determination unit
- 114,214: adjustment unit
- 116, 216: feature extraction unit
- 118, 218: registered data creation unit
- 120,220: registered data storage unit
- 122, 222: recognition parameter storage unit
- 124, 224: face recognition unit
- 211: image storage unit

## Claims

1. A personal identification device comprising:
a registered data storage unit that stores registered data containing facial feature data of a registered user;
a recognition parameter storage unit that stores a recognition parameter representing a recognition level of face recognition processing;
an image determination unit that determines whether or not image quality of a user facial image input from an imaging device is appropriate;
an adjustment unit that adjusts a setting of the imaging device or modifies the recognition parameter stored in the recognition parameter storage unit, in accordance with a result of determination in the image determination unit;
a feature extraction unit that extracts facial feature data of the user from the facial image; and
a face recognition unit that compares the feature data extracted by the feature extraction unit with the registered data stored in the registered data storage unit and determines whether or not the user is the registered user based on a result of comparison and the recognition parameter stored in the recognition parameter storage unit.

2. The personal identification device according to claim 1, wherein the adjustment unit determines whether or not it is possible to adjust the setting of the imaging device when it is determined in the image determination unit that the image quality of the facial image is not appropriate; when it is possible to adjust the setting, adjusts the setting of the imaging device; and, when it is not possible to adjust the setting, modifies the recognition parameter stored in the recognition parameter storage unit.

3. The personal identification device according to claim 1 or 2, wherein the image determination unit determines whether or not the image quality of the facial image is appropriate based on the image quality of a central region of the facial image.

4. The personal identification device according to any one of claims 1 to 3, wherein the personal identification device is incorporated in a portable device equipped with the imaging device.

5. A personal identification method comprising:
an image determination step for determining whether or not image quality of a facial image of a user input from an imaging device is appropriate;
an adjustment potential determination step for determining whether or not it is possible to adjust a setting of the imaging device when the image quality of the facial image is determined not to be appropriate in the image determination step;
an imaging device adjustment step for adjusting the setting of the imaging device and reattempting the image determination step when it is determined in the adjustment potential determination step that it is possible to adjust the setting of the imaging device;
a recognition parameter modification step for modifying a recognition parameter representing a recognition level assigned to face recognition processing, which has been stored in a recognition parameter storage unit, when it is determined in the adjustment potential determination step that it is not possible to adjust the setting of the imaging device;
a feature extraction step for extracting facial feature data of the user from the facial image when it is determined in the image determination step that the image quality of the facial image is appropriate or when the recognition parameter has been modified in the recognition parameter modification step; and
a face recognition step for comparing the feature data extracted in the feature extraction step with registered data containing feature data on a registered user face, which has been stored in a registered data storage unit, to determine whether or not the user is the registered user based on a result of comparison and the recognition parameter stored in the recognition parameter storage unit.

6. A personal identification method comprising:
a feature extraction step for extracting facial feature data of a user from a facial image of the user input from an imaging device;
a face recognition step for comparing the feature data extracted in the feature extraction step with registered data containing feature data on a registered user face, which has been stored in a registered data storage unit, to determine whether or not the user is the registered user based on a result of comparison and a recognition parameter representing a recognition level assigned to face recognition processing, which has been stored in a recognition parameter storage unit;
an image determination step for determining whether or not the image quality of the facial image is appropriate when it is not determined in the face recognition step that the user is the registered user;
an adjustment potential determination step for determining whether or not it is possible to adjust a setting of the imaging device when it is determined in the image determination step that the image quality of the facial image is not appropriate;
an imaging device adjustment step for adjusting the setting of the imaging device when it is determined in the adjustment potential determination step that it is possible to adjust the setting of the imaging device, and reattempting the feature extraction step and/or the face recognition step;
a recognition parameter modification step for modifying the recognition parameter, which has been stored in the recognition parameter storage unit, when it is determined in the adjustment potential determination step that it is not possible to adjust the setting of the imaging device; and
a reattempt step for reattempting the face recognition step based on the modified recognition parameter and the result of comparison.

7. The personal identification method according to claim 6, wherein it is determined in the image determination step whether or not the image quality of the facial image is appropriate even when the sufficient facial feature data of the user cannot be extracted from the facial image in the feature extraction step.
